# DEMANDE DE BREVET EUROPEEN

(11) **EP 3 599 782 A1**
(43) Date de publication de la demande: **29.01.2020**
(21) Numéro de dépôt: 19187895.8
(22) Date de dépôt: 23.07.2019
(51) Int. Cl.: H04W 12/04, H04W 12/00, H04W 84/12

(54) **RECUPERATION DE CLE RESEAU, GESTION DE RECUPERATION DE CLE RESEAU, MISE A DISPOSITION DE CLE RESEAU, TERMINAL, SERVEUR ET POINT D'ACCES LES METTANT EN OEUVRE**

(30) Priorité: 24.07.2018 FR 1856842
(71) Demandeur: ORANGE, 75015 Paris (FR)
(72) Inventeur: NAJMI, Elyass, 92326 CHÂTILLON CEDEX (FR); BENDIABDALLAH, Halim, 92326 CHÂTILLON CEDEX (FR)

(57) **Abrégé**

Un objet de l'invention est un procédé de récupération d'une clé réseau d'un point d'accès à un réseau mis en oeuvre par un terminal, la clé réseau permettant au terminal d'être associé au point d'accès lors d'une première connexion du terminal au point d'accès, le procédé de récupération de clé réseau comportant une réception par le terminal d'une clé réseau mise à disposition par un point d'accès sur un serveur suite à une demande par le terminal au serveur de la clé réseau du point d'accès, la demande comportant un identifiant du point d'accès et ayant été relayée par le serveur au point d'accès associé à l'identifiant du point d'accès de la demande.

Ainsi le point d'accès ne transmettant pas directement la clé réseau au terminal mais à un serveur sur lequel le terminal vient la récupérer, cela limite les intrusions dans le réseau lié à la vulnérabilité du réseau Wifi.

## Description

L'invention concerne un procédé de récupération de clé réseau, un procédé de gestion de récupération de clé réseau, un procédé de mise à disposition de clé réseau, un terminal, un serveur et un point d'accès. La clé réseau est notamment une clé permettant d'associer un terminal à un point d'accès via un réseau sans-fil tel que le réseau Wifi (marque déposée).

Afin de connecter un terminal (ordinateur, smartphone, imprimante, caméra, etc.) au travers d'un réseau sans fil (notamment Wifi) à un dispositif de point d'accès à un réseau de communication (notamment un routeur Internet ou une passerelle entre un réseau privé et un réseau public tel qu'Internet), les points d'accès sont dotés d'une clé de réseau aussi nommée clé WEP (Wired Equivalent Privacy en anglais pour « intimité équivalente au filaire » c'est-à-dire une sécurisation de l'accès sans fil), WAP (Wifi Protected Access en anglais ou accès Wifi protégé) ou WAP2 (marques déposées) suivant la norme utilisée.
La clé réseau peut être simplement inscrite sur le dispositif de point d'accès, aussi nommé point d'accès par abus de langage (par exemple sur une étiquette directement apposée sur le point d'accès et/ou une étiquette apposée sur l'emballage du point d'accès). L'utilisateur souhaitant connecter une tablette via le réseau Wifi à ce point d'accès, saisira lors d'une demande connexion à ce point d'accès sur sa tablette la clé Wifi lue sur le point d'accès. Cette première connexion est donc fastidieuse car les clés réseau sont souvent longues pour éviter les risques d'intrusion dans le réseau privé. En outre, la sécurité du réseau dépend du lieu dans lequel le point d'accès est placé car s'il est accessible à un grand nombre de personnes, celle-ci s'en trouvera réduite puisque la clé réseau est facilement lisible.
Cette clé réseau peut être modifiée par les utilisateurs au moyen d'une interface du point d'accès accessible via Internet (soit directement sur une page Internet soit via une application dédié au point d'accès, tel que l'application Ma Livebox - marque déposée). Le risque est alors l'oubli de la clé réseau modifiée par l'utilisateur empêchant toute nouvelle association de terminal avec le point d'accès, c'est-à-dire d'ajout de terminal au réseau privé géré par le point d'accès.
Pour faciliter cette première connexion à un grand nombre d'utilisateurs, la clé réseau apposée sur le point d'accès peut être soit remplacé soit combiné à un code type code barre ou code QR comportant la clé réseau. Néanmoins, la sécurité du réseau privé dépend là encore de l'emplacement du point d'accès et de son accessibilité physique par les tiers.
La norme WPS (Wifi Protected Setup en anglais pour initialisation Wifi sécurisée) propose elle aussi de faciliter cette première connexion en proposant de générer une clé réseau aléatoire plus solide que la clé réseau fournie par le fabricant du point d'accès. Afin que cette clé réseau aléatoire soit connue des deux équipements à associer : le point d'accès et le terminal (tablette, imprimante, smartphone...), le protocole WPS comporte une série d'échanges de messages entre le point d'accès et le terminal suite à une action de l'utilisateur du terminal qui lorsque la série d'échanges est effectuée avec succès se termine par l'indication que le protocole est complet permettant la transmission de la clé réseau aléatoire et la première connexion du terminal au point d'accès.
La norme WPS prévoit plusieurs modes de fonctionnement :
- deux modes « hors bande » (out-of-band en anglais), c'est-à-dire n'utilisant pas le réseau Wifi pour la série d'échanges du protocole WPS:
   ∘ le mode USB dans lequel l'utilisateur connecte le terminal au point d'accès en utilisant un port USB via lequel la série d'échanges du protocole WPS est transmise, et
   ∘ le mode NFC dans lequel l'utilisateur approche le terminal du point d'accès pour permettre une communication NFC (Near Field Communication en anglais pour communication en champ proche)
   L'inconvénient de ces deux modes de mise en oeuvre du WPS est qu'il nécessite la proximité du terminal avec le point d'accès auquel l'utilisateur souhaite l'associer ce qui n'est pas toujours possible : ordinateur, télévision, imprimante...
- le mode PIN dans lequel l'utilisateur entre sur son terminal un numéro d'identification du point d'accès (numéro lu sur le point d'accès, notamment sur une étiquette collée sur le point d'accès ou directement gravé ou imprimé sur celui-ci, ou sur un écran du point d'accès) lors de la demande première connexion du terminal avec le point d'accès. L'inconvénient de cette méthode est qu'elle est vulnérable aux attaques de masse.
- le mode « bouton poussoir » (ou « Push Button » en anglais) dans lequel l'utilisateur pousse un bouton virtuel ou physique sur chacun des deux équipements à associer : le terminal et le point d'accès.
Dans ces deux derniers modes, les échanges WPS sont effectués entre le terminal et le point d'accès via le réseau Wifi suite à l'action de 'l'utilisateur (envoie du code PIN au point d'accès et/ou appuie sur les boutons poussoir).
Or, quels que soit la technique aujourd'hui utilisée pour la première connexion d'un terminal à un point d'accès, celle-ci reste sensible aux attaques de tiers et aux risques d'intrusion de tiers dans un réseau privé via le point d'accès.

Un des buts de la présente invention est de remédier à des inconvénients de l'état de la technique. Un objet de l'invention est un procédé de récupération d'une clé réseau d'un point d'accès à un réseau mis en oeuvre par un terminal, la clé réseau permettant au terminal d'être associé au point d'accès lors d'une première connexion du terminal au point d'accès, le procédé de récupération de clé réseau comportant une réception par le terminal d'une clé réseau mise à disposition par un point d'accès sur un serveur suite à une demande par le terminal au serveur de la clé réseau du point d'accès, la demande comportant un identifiant du point d'accès et ayant été relayée par le serveur au point d'accès associé à l'identifiant du point d'accès de la demande. Ainsi le point d'accès ne transmettant pas directement la clé réseau au terminal mais à un serveur sur lequel le terminal vient la récupérer, cela limite les intrusions liées à la vulnérabilité du réseau Wifi dans le réseau privé géré par le point d'accès.

Avantageusement, la clé réseau reçue par le terminal est incluse dans un message crypté transmis par le point d'accès au serveur. Ainsi, la récupération de la clé réseau par le terminal est sécurisée grâce au cryptage. En effet, si un dispositif tiers intercepte le message récupéré par le terminal sur le serveur, il ne pourra pas accéder à la clé réseau car celle-ci est cryptée.
Avantageusement, le procédé de récupération de clé réseau comporte un décryptage, au moyen d'une clé privé générée par le terminal avec une clé publique à partir d'un identifiant du point d'accès, du message crypté émis par le point d'accès au serveur, le message ayant été crypté avec la clé publique transmise par le terminal à destination du point d'accès et comportant la clé réseau du point d'accès. Ainsi, seul le terminal demandeur pourra accéder à la clé réseau du point d'accès mise à disposition sur le serveur puisque lui seul possède la clé de décryptage (clé privée) puisque seule la clé de cryptage (clé publique) a été transmise via le serveur au point d'accès. Donc un dispositif tiers n'aura accès qu'à la clé publique mais pas à la clé privé permettant le décryptage et ne pourra donc pas décrypter le message même si le dispositif tiers intercepte le message crypté lors de la récupération du message crypté par le terminal sur le serveur.
Avantageusement, le procédé de récupération de clé réseau comporte une génération d'un couple de clés asymétriques comportant une clé publique et une clé privé générées à partir d'un identifiant du point d'accès, la clé publique constituant l'identifiant de point d'accès compris dans la demande et cryptant la clé réseau reçue par le terminal. Ainsi, seul le terminal dispose à la fois des clés publique et privé car il ne demande pas leur génération par un autre dispositif augmentant ainsi la sécurité du réseau privé.
Avantageusement, le procédé de récupération de clé réseau comporte une transmission d'une clé publique générée à partir d'un identifiant du point d'accès à destination du point d'accès, la clé publique constituant l'identifiant de point d'accès compris dans la demande et cryptant la clé réseau reçue par le terminal. Ainsi, des clés différentes (publiques et privés) sont générées à chaque connexion du terminal à un nouveau point d'accès limitant les risques d'interception des échanges cryptés par le terminal.
Avantageusement, le procédé de récupération de clé réseau comporte une réception d'un message provenant du point d'accès, le message étant crypté avec une clé publique et comportant la clé réseau, la clé publique générée à partir d'un identifiant du point d'accès constituant l'identifiant de point d'accès compris dans la demande.
Avantageusement, la clé réseau est reçue par le terminal, via un réseau distinct du réseau associé à la clé réseau, du serveur communicant, via un réseau distinct du réseau associé à la clé réseau, avec le point d'accès ayant émis la clé réseau. Ainsi, les risques d'interception des échanges entre le terminal et le serveur sont réduits notamment lorsque le réseau utilisé pour ces échanges est un réseau mobile notamment 3G, 4G ou 5G alors que la clé réseau est une clé Wifi (tel que WEP, WAP ou WAP2).
Avantageusement, le procédé de récupération de clé réseau comporte une réception par le terminal d'une notification de disponibilité de la clé réseau émise par le serveur suite à une réception par le serveur de la clé réseau provenant du point d'accès, ladite réception de la notification autorisant le terminal à récupérer la clé réseau auprès du serveur. Ainsi, la clé réseau n'est pas directement envoyée par le serveur au terminal suite à la demande du terminal au serveur réduisant encore les risques d'interception.
Avantageusement, après la mise à disposition de la clé réseau sur le serveur par le point d'accès, la réception de la clé réseau par le terminal est déclenchée par le point d'accès suite à une action physique sur le point d'accès d'un utilisateur du terminal. Ainsi, des utilisateurs tiers n'ayant pas accès au point d'accès ne pourront pas intercepter la clé réseau.
Avantageusement, la mise à disposition de la clé réseau sur le serveur par le point d'accès PA a une durée limitée. Ainsi, l'interception de la clé réseau est réduite à cette durée de mise à disposition ce qui la rend plus complexe.
Un objet de l'invention est également un procédé de gestion de récupération d'une clé réseau d'un point d'accès à un réseau mis en oeuvre par un serveur, la clé réseau permettant au terminal d'être associé au point d'accès lors d'une première connexion du terminal au point d'accès, le procédé de gestion de récupération de clé réseau comportant une émission par le serveur vers un terminal d'une clé réseau mise à disposition par un point d'accès sur le serveur suite à une demande par le terminal au serveur de la clé réseau du point d'accès, la demande comportant un identifiant du point d'accès et ayant été relayée par le serveur au point d'accès associé à l'identifiant du point d'accès de la demande.
Un objet de l'invention est aussi un procédé de mise à disposition d'un terminal d'une clé réseau d'un point d'accès à un réseau mis en oeuvre par un point d'accès, la clé réseau permettant au terminal d'être associé au point d'accès lors d'une première connexion du terminal au point d'accès, le procédé de mise à disposition de clé réseau comportant une émission par le point d'accès vers un serveur à destination d'un terminal d'une clé réseau suite à une demande par le terminal au serveur de la clé réseau du point d'accès, la demande comportant un identifiant du point d'accès et ayant été relayée par le serveur au point d'accès Associé à l'identifiant du point d'accès de la demande.
Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie, respectivement, d'un terminal, d'un serveur ou d'un point d'accès et étant conçus pour commander l'exécution des différentes étapes de ce procédé. L'invention vise donc aussi un programme comprenant des instructions de code programme pour l'exécution des étapes du procédé de récupération de clé réseau, et/ ou du procédé de gestion de récupération et/ou du procédé de mise à disposition lorsque ledit programme est exécuté par un processeur. Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.
Un objet de l'invention est un terminal comportant une interface de récupération d'une clé réseau d'un point d'accès à un réseau mis en oeuvre par un terminal, la clé réseau permettant au terminal d'être associé au point d'accès lors d'une première connexion du terminal au point d'accès, l'interface de récupération comportant un récepteur d'une clé réseau mise à disposition par un point d'accès sur un serveur suite à une demande par le terminal au serveur de la clé réseau du point d'accès, la demande comportant un identifiant du point d'accès et ayant été relayée par le serveur au point d'accès Associé à l'identifiant du point d'accès de la demande.
Un objet de l'invention est également un Serveur comportant un gestionnaire de récupération d'une clé réseau d'un point d'accès à un réseau mis en oeuvre par un serveur, la clé réseau permettant au terminal d'être associé au point d'accès lors d'une première connexion du terminal au point d'accès, le gestionnaire de récupération de clé réseau comportant un émetteur vers un terminal d'une clé réseau mise à disposition par un point d'accès sur le serveur suite à une demande par le terminal au serveur de la clé réseau du point d'accès, la demande comportant un identifiant du point d'accès et ayant été relayée par le serveur au point d'accès Associé à l'identifiant du point d'accès de la demande.
Un objet de l'invention est aussi un point d'accès à un réseau comportant un fournisseur de clé réseau apte à mettre à disposition d'un terminal une clé réseau, la clé réseau permettant au terminal d'être associé au point d'accès lors d'une première connexion du terminal au point d'accès, le fournisseur de clé réseau comportant un émetteur vers un serveur à destination d'un terminal d'une clé réseau suite à une demande par le terminal au serveur de la clé réseau du point d'accès, la demande comportant un identifiant du point d'accès et ayant été relayée par le serveur au point d'accès Associé à l'identifiant du point d'accès de la demande.

Les caractéristiques et avantages de l'invention apparaîtront plus clairement à la lecture de la description, faite à titre d'exemple, et des figures s'y rapportant qui représentent :
- Figure 1, un schéma simplifié d'un procédé de récupération d'une clé réseau d'un point d'accès par un terminal selon l'invention,
- Figure 2, un schéma simplifié d'un procédé de gestion de récupération d'une clé réseau d'un point d'accès mis en oeuvre par un serveur selon l'invention,
- Figure 3, un schéma simplifié de mise à disposition d'un terminal sur un serveur d'une clé réseau par un point d'accès selon l'invention,
- Figure 4, un schéma simplifié des échanges dans une architecture de communication mettant en oeuvre les procédés de récupération d'une clé réseau, de gestion de récupération d'une clé réseau et de mise à disposition d'une clé réseau selon l'invention,
- Figure 5, un schéma simplifié des échanges selon l'invention dans un mode réalisation particulier,
- Figure 6, un schéma simplifié d'une architecture de communication comportant un terminal, un serveur et un point d'accès selon l'invention.

Dans un cas d'usage particulier, la clé réseau est une clé d'accès via le réseau Wifi à un réseau privé et/ou publique en utilisant un point d'accès Wifi auquel est associé cette clé réseau. La clé réseau est notamment une clé WEP, WAP ou WAP2, etc.
Dans un cas d'usage particulier distinct ou identique au cas d'usage précédent, le point d'accès est un routeur réseau notamment un routeur d'accès et/ou une passerelle entre un réseau publique et un réseau privé et/ou un boitier d'accès à un réseau publique, tel qu'Internet, aussi nommé « box » pas abus de langage, tel que la Livebox (marque déposée).

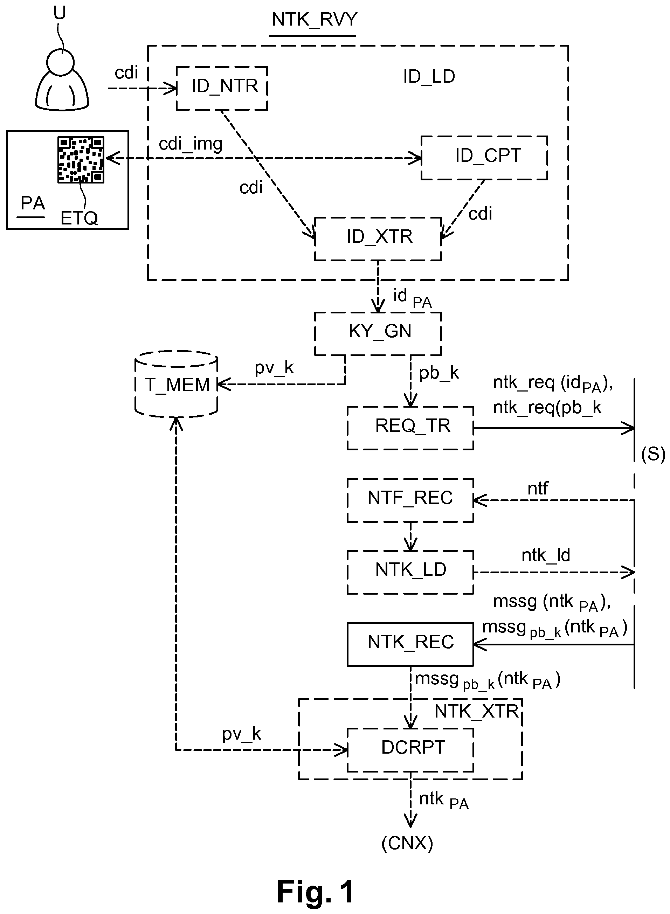

La figure 1 illustre un schéma simplifié d'un procédé de récupération d'une clé réseau d'un point d'accès par un terminal selon l'invention.
Le procédé de récupération NTK_RVY d'une clé réseau d'un point d'accès *ntk_{PA}* à un réseau est mis en oeuvre par un terminal T. La clé réseau *ntk_{PA}* permet au terminal T d'être associé au point d'accès PA lors d'une première connexion du terminal T au point d'accès PA. Le procédé de récupération de clé réseau NTK_RVY comporte une réception NTK_REC par le terminal T d'une clé réseau *ntk_{PA}* mise à disposition par un point d'accès PA sur un serveur S suite à une demande *ntk_req* par le terminal T au serveur S de la clé réseau du point d'accès. La demande *ntk_req* comporte un identifiant du point d'accès *id_{PA}* et est relayée par le serveur S au point d'accès PA associé à l'identifiant du point d'accès *id_{PA}* de la demande *ntk_req.*
En particulier, la clé réseau *ntk_{PA}* reçue par le terminal T est incluse dans un message crypté *mssg*_{*pb_*k} transmis par le point d'accès PA au serveur S.
En particulier, le procédé de récupération de clé réseau NTK_RVY comporte un décryptage DCRPT, au moyen d'une clé privé *pv_k* générée par le terminal T *avec* une clé publique *pb_k* à partir d'un identifiant du point d'accès *id_{PA},* du message crypté *mssg_{pb_k}* émis par le point d'accès PA au serveur S. Le message *mssg* a été crypté avec la clé publique *pb_k* transmise par le terminal T à destination du point d'accès PA et comporte la clé réseau du point d'accès *ntk_{PA}.*
En particulier, le procédé de récupération de clé réseau NTK_RVY comporte une génération KY_GN d'un couple de clés asymétriques *(pb_k, pv_k)* comportant une clé publique *pb_k* et une clé privé *pv_k* générées à partir d'un identifiant du point d'accès *id_{PA}.* La clé publique *pb_k* constitue l'identifiant de point d'accès compris dans la demande *ntk_req* et crypte la clé réseau *ntk_{PA}* reçue par le terminal T.
En particulier, le procédé de récupération de clé réseau NTK_RVY comporte une transmission REQ_TR d'une clé publique *pb_k* générée à partir d'un identifiant du point d'accès *id_{PA}* à destination du point d'accès PA. La clé publique *pb_k* constitue l'identifiant de point d'accès compris dans la demande *ntk_req* et crypte la clé réseau *ntk_{PA}* reçue par le terminal T.
En particulier, le procédé de récupération de clé réseau NTK_RVY comporte une réception NTK_REC d'un message *mssg(ntk_{PA}), mssg_{pb_k}(ntK_{PA})* provenant du point d'accès PA. Le message *mssg_{pb_k}(ntk_{PA})* est crypté avec une clé publique *pb_k* et comporte la clé réseau *ntk_{PA}.* La clé publique *pb_k* générée à partir d'un identifiant du point d'accès *id_{PA}* constitue l'identifiant de point d'accès PA compris dans la demande *ntk_req.*
En particulier, la clé réseau *ntk_{PA}* est reçue par le terminal T, via un réseau distinct du réseau associé à la clé réseau, du serveur communicant S, via un réseau distinct du réseau associé à la clé réseau, avec le point d'accès PA ayant émis la clé réseau *ntk_{PA}.* Notamment, la clé réseau est associé à un réseau local sans fil tel que le réseau Wifi, Lifi, etc. (marques déposées) et le réseau utilisé pour les échanges entre le terminal T et serveur S est notamment un réseau mobile, tel que 3G, 4G, 5G, Edge, etc. (marques déposées), le réseau utilisé pour les échanges entre le serveur S et le point d'accès PA peut à nouveau être un réseau mobile ou un réseau filaire (ADSL, XDSL, fibre, etc.).
En particulier, le procédé de récupération de clé réseau NTK_RVY comporte une réception NTF_REC par le terminal T d'une notification *ntf* de disponibilité de la clé réseau *ntk_{PA}* émise par le serveur S suite à une réception par le serveur S de la clé réseau *ntk_{PA}* provenant du point d'accès PA. Ladite réception de la notification NTF_REC autorise le terminal T à récupérer la clé réseau *ntk_{pA}* auprès du serveur S.
En particulier, après la mise à disposition de la clé réseau *ntk_{PA}* sur le serveur S par le point d'accès PA, la réception de la clé réseau par le terminal NTK_REC est déclenchée psh par le point d'accès PA suite à une action physique a sur le point d'accès PA d'un utilisateur U du terminal T. En particulier, la mise à disposition de la clé réseau *ntk_{PA}* sur le serveur S par le point d'accès PA a une durée limitée.
En particulier, le procédé de récupération de clé réseau NTK_RVY comporte une identification ID_LD du point d'accès PA que l'utilisateur U souhaite connecter au terminal T mettant en oeuvre le procédé de récupération de clé réseau NTK_RVY.
Notamment, lorsqu'un utilisateur U souhaite connecter un terminal à un point d'accès PA, il saisit sur son terminal T un identifiant ou un code d'activation cdi lu sur le point d'accès PA, ou capture au moyen de son terminal T (photographie, scanne, etc.) un code d'activation du point d'accès PA. Le code d'activation est soit gravé soit imprimé sur le boitier du point d'accès PA ou sur une étiquette apposée sur le boitier du point d'accès PA ou affiché sur un écran du point d'accès PA. Le code d'activation est notamment une série de caractères (chiffres, lettres ou symboles), un code barre, un code QR, etc. En particulier, dans le cas où l'utilisateur saisi un identifiant ou un code d'activation sur son terminal, le procédé de récupération de clé réseau NTK_RVY comporte une lecture de la saisie ID_NTR fournissant le code d'activation ou l'identifiant du point d'accès cdi. En particulier, dans le cas où le code d'activation cdi est capturé, le procédé de récupération de clé réseau NTK_RVY comporte la capture ID_CPT du code d'activation *cdi,* notamment sous la forme d'une image *cdi_img.* Ainsi, le procédé de récupération de clé réseau NTK_RVY comporte une identification du point d'accès ID_LD incluant notamment une lecture de la saisie ID_NTR et/ou une capture ID_CPT du code d'activation et/ou de l'identifiant *cdi* du point d'accès PA.
En particulier, dans le cas où le point d'accès PA est identifié par un code d'activation *cdi* et non un identifiant au niveau du terminal, le procédé de récupération de clé réseau NTK_RVY comporte une extraction ID_XTR de l'identifiant du point d'accès *id_{PA}* du code d'activation. Eventuellement, l'identification du point d'accès ID_LD comporte l'extraction de l'identifiant ID_XTR.
En particulier, l'identification du point d'accès ID_LD transmet REQ_TR l'identifiant du point d'accès soit directement au serveur S dans la requête de clé réseau *ntk_req(id_{PA})* à destination du point d'accès, soit la fournit à une génération de clé de cryptage KY_GN qui fournit alors au serveur S dans la requête de clé réseau *ntk_req(pb_k)* à destination du point d'accès une clé de cryptage *pb_k* en fonction de l'identifiant du point d'accès *id_{PA}.* Dans l'alternative où la requête de clé réseau comporte une clé de cryptage *pb_k,* cette clé de cryptage pb_k sera utilisée par le point d'accès pour crypter la clé réseau *ntk_{PA}* mise à disposition sur le serveur S par le point d'accès PA.

Cette génération de clé de cryptage KY_GN est notamment comprise dans le procédé de récupération de clé réseau NTK_RVY.
La génération de clé de cryptage KY_GN est, en particulier, une génération de clés asymétriques fournissant un couple de clés : clé publique pb_k transmise au serveur pour le cryptage des messages de réponse et clé privé pv_k conservée dans le terminal, par exemple dans une mémoire T_MEM ou une base de données, pour le décryptage des messages de réponse (notamment le décryptage de la clé réseau *ntk_{PA}* mise à disposition par le point d'accès PA sur le serveur S).
En particulier, le procédé de récupération de clé réseau NTK_RVY comporte une génération de requête de clé réseau REQ_GN (non illustrée) qui fournit à la transmission de requête REQ_TR la requête de clé réseau *ntk_req* comportant l'identifiant du point d'accès soit directement *id_{PA}* soit dans la clé de cryptage *pb_k* qui émet vers le serveur S la requête de clé réseau *ntk_req(id_{PA}), ntk_req(pb_k)* à destination du point d'accès PA.
En particulier, suite à la réception NTF_REC par le terminal T d'une notification *ntf* de disponibilité de la clé réseau *ntk_{PA}* émise par le serveur S, le procédé de récupération de clé réseau NTK_RVY comporte un chargement de la clé réseau NTK_LD qui envoie au serveur une commande chargement ntk_Id déclenchement l'émission par le serveur de la clé réseau (cryptée ou non suivant le mode transmission de la requête de clé réseau mis en oeuvre par le procédé de récupération) suite à laquelle le procédé de récupération de clé réseau NTK_RVY comporte la réception de la clé réseau NTK_REC.
Dans le cas où la clé réseau reçue *ntk_{PA}* est soit directement cryptée *ntk_{PA,pb_k}* soit incluse dans un message cryptée mssg*_{pb_k}(ntk_{PA)},* le procédé de récupération de clé réseau NTK_RVY comporte un décryptage de la clé réseau DCRPT fournissant respectivement la clé réseau ntk_{PA}, ou le message décrypté mssg dont est extraite (NTK_XTR non illustré) la clé réseau ntk_{PA}.
Le procédé de récupération de clé réseau NTK_RVY fournit la clé réseau du point d'accès *ntk_{PA}* provenant du serveur S à un procédé de connexion CNX d'un terminal à un point d'accès mis en oeuvre par le terminal.
Un mode réalisation particulier du procédé de récupération NTK_RVY est un programme comprenant des instructions de code programme pour l'exécution des étapes du procédé de récupération de clé réseau lorsque ledit programme est exécuté par un processeur.

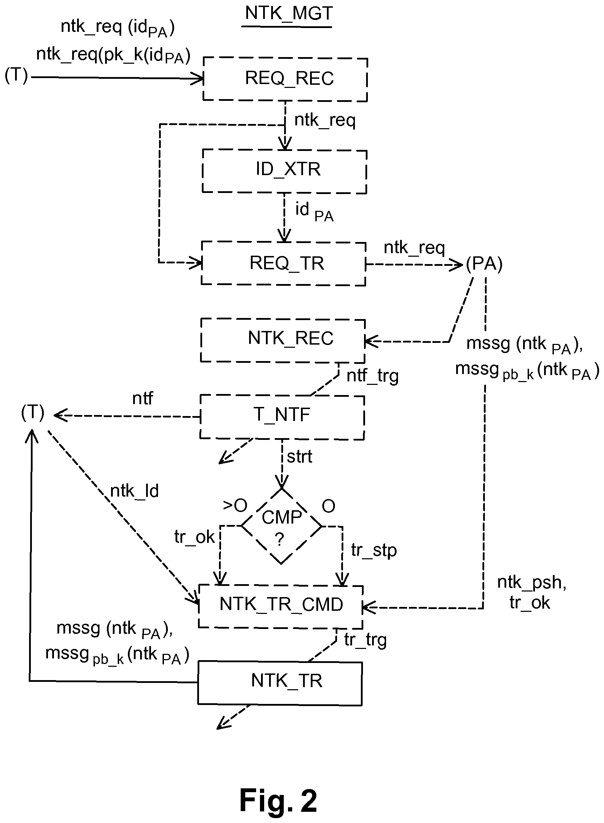

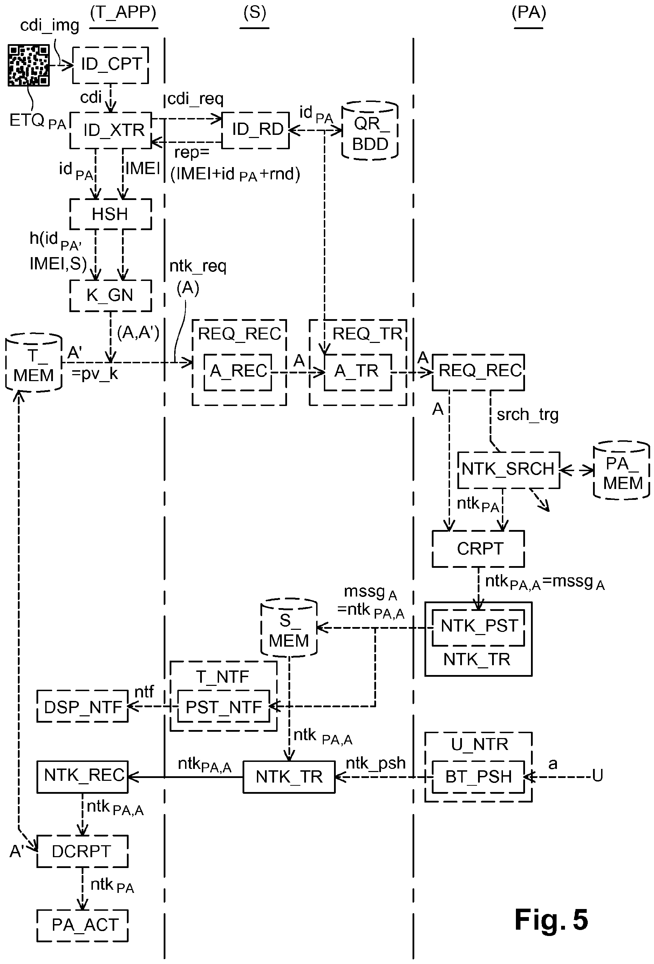

La figure 2 illustre un schéma simplifié d'un procédé de gestion de récupération d'une clé réseau d'un point d'accès mis en oeuvre par un serveur selon l'invention.
Le procédé de gestion NTK_MGT de récupération d'une clé réseau d'un point d'accès à un réseau *ntk_{PA}* est mis en oeuvre par un serveur S. La clé réseau *ntk_{PA}* permet au terminal T d'être associé au point d'accès PA lors d'une première connexion du terminal T au point d'accès PA. Le procédé de gestion de récupération de clé réseau NTK_MGT comporte une émission NTK_TR par le serveur S vers un terminal T d'une clé réseau *ntk_{PA}* mise à disposition par un point d'accès PA sur le serveur S suite à une demande *ntk_req* par le terminal T au serveur S de la clé réseau du point d'accès. La demande *ntk_req* comporte un identifiant du point d'accès *id_{PA}* et est relayée par le serveur S au point d'accès PA associé à l'identifiant du point d'accès *id_{PA}* de la demande *ntk_req.*
En particulier, le procédé de gestion NTK_MGT de récupération de clé réseau comporte une réception REQ_REC d'une demande ou requête de clé réseau *nkt_req(id_{PA}), nkt_req(pk-k)* émise par le terminal T vers le serveur S à destination du point d'accès PA en fonction d'un identifiant du point d'accès *id_{PA}.*
En particulier, le procédé de gestion NTK_MGT de récupération de clé réseau comporte une extraction ID_XTR de l'identifiant du point d'accès de la requête de clé réseau *ntk_req.* L'identifiant de point d'accès extrait *id_{PA}* est fourni à la transmission de requête REQ_TR que comporte le procédé de gestion NTK_MGT de récupération de clé réseau. La transmission de requête REQ_TR relaie alors la requête de clé réseau *ntk_req* reçue du terminal T au point d'accès PA ainsi identifié *id_{PA}.*
Dans un mode réalisation alternatif illustré par la figure 5, l'identifiant du point d'accès *id_{PA}* est connu du serveur S suite à une lecture ID_RD de l'identifiant du point d'accès *id_{PA}* dans une base de données de code d'activation, notamment de code QR QR_BDD par le serveur S sur demande du terminal T lors de l'extraction de l'identifiant ID_XTR par le terminal T. Ainsi, lorsque le serveur S reçoit REQ_REC du terminal T la requête de clé réseau *ntk_req,* le serveur S disposant déjà de l'identifiant du point d'accès *id_{PA},* il transmet REQ_TR la requête de clé réseau *ntk_req* reçue du terminal T au point d'accès PA ainsi identifié *id_{PA}.*
Suite à la transmission REQ_TR par le serveur S de la requête de clé réseau *ntk_req* reçue du terminal T au point d'accès PA, le procédé de gestion NTK_MGT de récupération de clé réseau comporte une réception de la clé réseau NTK_REC. Eventuellement, la réception de la clé réseau NTK_REC comporte un stockage (non illustré) dans une mémoire du serveur S de la clé réseau suite à une commande d'écriture de la clé réseau sur le serveur S émise par le point d'accès PA. La clé réseau est reçue par le serveur soit en propre *ntk_{PA},* soit dans un message *mssg,* et/ou crypté(e) au moyen de la clé de cryptage fournie par la requête de clé réseau *pb_k* ou non.
La réception de la clé réseau NTK_REC par le serveur S déclenche directement ou indirectement (c'est-à-dire avec des étapes intermédiaires) l'émission de la clé réseau NTK_TR au terminal demandeur T telle que reçue du point d'accès c'est-à-dire, respectivement, soit en propre *ntk_{PA},* soit dans un message *mssg,* et/ou crypté(e) au moyen de la clé de cryptage fournie par la requête de clé réseau *pb_k* ou non.
Dans le cas où l'émission de la clé réseau NTK_TR est déclenchée indirectement, le procédé de gestion NTK_MGT de récupération de clé réseau comporte au moins une notification de disponibilité de la clé réseau T_NTF transmettant un message de notification *ntf* au terminal T. Eventuellement, cette notification T_NTF résulte du stockage de la clé réseau reçue *ntk_{PA}* dans le serveur S soit par écriture par le point d'accès PA soit suite à la réception de la clé réseau par le serveur NTK_REC. La réception de la clé réseau par le serveur NTK_REC déclenche *ntf_trg* alors la notification T_NTF.
En particulier, la mise à disposition de la clé réseau sur le serveur S par le point d'accès PA a une durée limitée.

Suivant le type de notification *ntf,* le procédé de gestion NTK_MGT de récupération de clé réseau comporte une commande de transmission de la clé réseau NTK_TR_CMD en fonction d'au moins un des messages suivants :
- une demande chargement de la clé réseau *ntk_Id* reçue du terminal ;
- une autorisation de transmission *ok_tr* fournie par le point d'accès PA suite à une action de l'utilisateur du terminal T sur le point d'accès ;
- une commande distribution ntk_psh envoyée par le point d'accès PA suite à une action de l'utilisateur du terminal T sur le point d'accès ;
- une autorisation de transmission *ok_tr* founie par un compteur déclenché par la notification T_NTF si la durée déterminée décomptée par le compteur n'a pas expirée ; etc.
Par exemple, après notification de la mise à disposition de la clé réseau T_NTF, si l'utilisateur U effectue une action prédéterminée sur le point d'accès PA, le procédé de gestion NTK_MGT de récupération de clé réseau recevra une commande distribution *ntk_psh* envoyée par le point d'accès PA qui déclenchera l'étape de commande de transmission de la clé réseau NTK_TR_CMD.
Eventuellement, lorsque le procédé de gestion NTK_MGT de récupération de clé réseau comporte un décompte CMP d'une durée prédéterminée, l'étape de commande de transmission de la clé réseau NTK_TR_CMD suite à la réception de la commande distribution ntk_psh envoyée par le point d'accès PA ne sera déclenchée que si le décompte CMP n'est pas terminé (décompte supérieur strict à zéro >0) et donne une autorisation de transmission *tr_ok.* Par conséquent, l'étape de commande de transmission de la clé réseau NTK_TR_CMD recevant la commande distribution *ntk_psh* déclenchera *tr_trg* la transmission NTK_TR de la clé réseau su serveur S vers le terminal T.
Si le décompte CMP est terminé (décompte égal à zéro 0), il interdit la transmission tr_stp. Par conséquent, l'étape de commande de transmission de la clé réseau NTK_TR_CMD recevant la commande distribution *ntk_psh* ne déclenchera pas la transmission NTK_TR.
Un mode réalisation alternatif est la réception par le serveur S à l'étape de commande de transmission de la clé réseau NTK_TR_CMD d'une demande chargement ntk_Id du terminal T. Soit la commande de transmission de la clé réseau NTK_TR_CMD déclenche *tr_trg* alors automatiquement la transmission NTK_TR de la clé réseau du serveur S au terminal T. Soit la commande de transmission de la clé réseau NTK_TR_CMD attend, avant de déclencher *tr_trg* la transmission NTK_TR de la clé réseau du serveur S au terminal T, une autorisation tr_ok du point d'accès PA et/ou du décompte CMP.
Par exemple, après notification de la mise à disposition de la clé réseau T_NTF, si l'utilisateur U effectue une action prédéterminée sur le point d'accès PA à un instant donné relatif à la demande de chargement *ntk_Id* (avant, simultanément ou après), le procédé de gestion NTK_MGT de récupération de clé réseau recevra une autorisation de transmission *tr_ok* envoyée par le point d'accès PA qui déclenchera l'étape de commande de transmission de la clé réseau NTK_TR_CMD.

Eventuellement, lorsque le procédé de gestion NTK_MGT de récupération de clé réseau comporte un décompte CMP d'une durée prédéterminée, l'étape de commande de transmission de la clé réseau NTK_TR_CMD suite à la réception de la demande de chargement envoyée par le terminal T ne sera déclenchée que si le décompte CMP n'est pas terminé (décompte supérieur strict à zéro >0) et donne une autorisation de transmission *tr_ok.* Par conséquent, l'étape de commande de transmission de la clé réseau NTK_TR_CMD recevant la demande de chargement *ntk_Id* déclenchera *tr_trg* la transmission NTK_TR de la clé réseau su serveur S vers le terminal T.
Si le décompte CMP est terminé (décompte égal à zéro 0), il interdit la transmission tr_stp. Par conséquent, l'étape de commande de transmission de la clé réseau NTK_TR_CMD recevant la commande distribution *ntk_psh* ne déclenchera pas la transmission NTK_TR.
Eventuellement, la transmission NTK_TR sera déclenchée suite à la demande de chargement ntk_Id que si à la fois le point d'accès PA et le décompte CMP l'autorise *tr_ok.* La transmission NTK_TR ne sera pas effectuée suite à la demande de chargement ntk_Id si au moins le décompte CMP l'interdit *tr_stp* (car la demande de chargement *ntk_Id* et/ou l'autorisation de transmission du point d'accès *tr_ok* est(sont) reçue(s) alors que le temps prédéterminé de chargement a expiré) ou si le point d'accès PA n'envoie pas d'autorisation *tr_ok.*
Un mode réalisation particulier du procédé de gestion de récupération de clé réseau NTK_MGT est un programme comprenant des instructions de code programme pour l'exécution des étapes du procédé de gestion de récupération lorsque ledit programme est exécuté par un processeur.

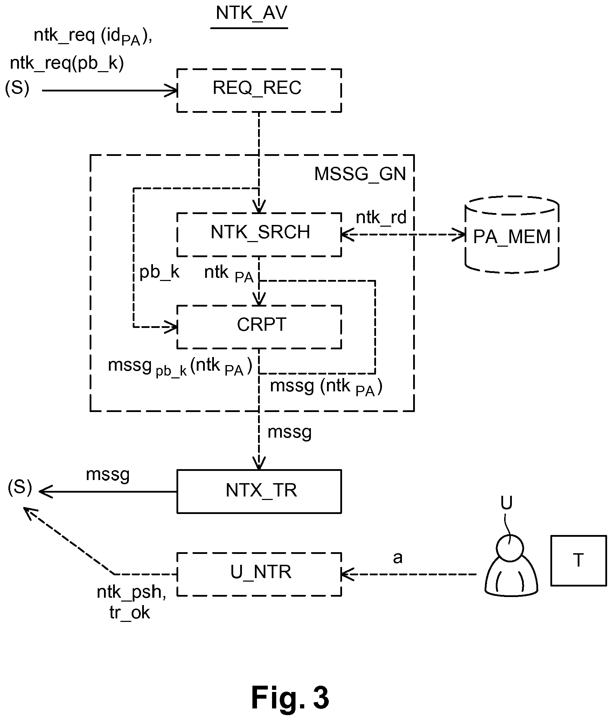

La figure 3 illustre un schéma simplifié de mise à disposition d'un terminal sur un serveur d'une clé réseau par un point d'accès selon l'invention.
Le procédé de mise à disposition NTK_AV d'un terminal T d'une clé réseau d'un point d'accès *ntk_{PA}* à un réseau est mis en oeuvre par un point d'accès PA. La clé réseau *ntk_{PA}* permet au terminal T d'être associé au point d'accès PA lors d'une première connexion du terminal T au point d'accès PA. Le procédé de mise à disposition de clé réseau NTK_AV comporte une émission NTK_TR par le point d'accès PA vers un serveur S à destination d'un terminal T d'une clé réseau *ntk_{PA}* suite à une demande *ntk_req* par le terminal T au serveur S de la clé réseau du point d'accès PA. La demande *ntk_req* comporte un identifiant du point d'accès *id_{PA}* et est relayée par le serveur S au point d'accès PA associé à l'identifiant du point d'accès *id_{PA}* de la demande *ntk_req.*
En particulier, le procédé de mise à disposition d'une clé réseau NTK_AV comporte une réception REQ_REC d'une demande ou requête de clé réseau *nkt_req(id_{PA}), nkt_req(pb_k)* émise par le terminal T et relayée par le serveur S vers le point d'accès PA en fonction d'un identifiant du point d'accès *id_{PA}.*
En particulier, le procédé de mise à disposition d'une clé réseau NTK_AV comporte une recherche NTK_SRCH de la clé réseau du point d'accès notamment dans une mémoire du point d'accès PA_MEM ou une base de données du point d'accès PA. La recherche NTK_SRCH de la clé réseau du point d'accès consiste notamment en la lecture de la clé réseau ntk_rd dans la mémoire PA_MEM ou tout autre dispositif de stockage du point d'accès.

Eventuellement, le procédé de mise à disposition d'une clé réseau NTK_AV comporte une génération de message MSSG_GN à destination du terminal demandeur T. Le message mssg comporte au moins la clé réseau lue *ntk_{PA}* (dans la mémoire par exemple) et est éventuellement crypté par une clé *pb_k* reçue dans la requête de clé réseau *ntk_req(pb_k).* La génération de message MSSG_GN comporte alors notamment un cryptage CRPT utilisant cette clé de cryptage *pb_k* fournie par la requête de clé réseau *ntk_req(pb_k).* Le cryptage CRPT crypte soit seulement la clé réseau *ntk_{PA},* soit tout ou partie du message généré *mssg* incluant la clé réseau *ntk_{PA.}*
La transmission de clé réseau NTK_TR transmet alors au serveur S soit directement la clé réseau *ntk_{PA}* cryptée ou non, soit le message généré *mssg* fournie par la génération de message MSSG_GN, c'est-à-dire un message crypté *mssg_{pb_k}(ntk_{PA})* ou non *mssg (ntk_{PA}).*
Suivant le mode de fonctionnement du procédé de gestion de récupération de clé réseau NTK_MGT mis en oeuvre par le serveur auquel la clé est fournie, l'utilisateur U est amené à effectuer une action a sur le point d'accès PA. Le procédé de mise à disposition d'une clé réseau NTK_AV comporte alors une capture de la saisie utilisateur U_NTR qui transmet soit une commande de distribution ntk_psh, soit une autorisation de transmission tr_ok au serveur S déclenchant l'émission par le serveur S vers le terminal T de la clé réseau ntk_{PA}.
Un mode réalisation particulier du procédé de mise à disposition NTK_AV de clé réseau par un point d'accès est un programme comprenant des instructions de code programme pour l'exécution des étapes du procédé de mise à disposition lorsque ledit programme est exécuté par un processeur.

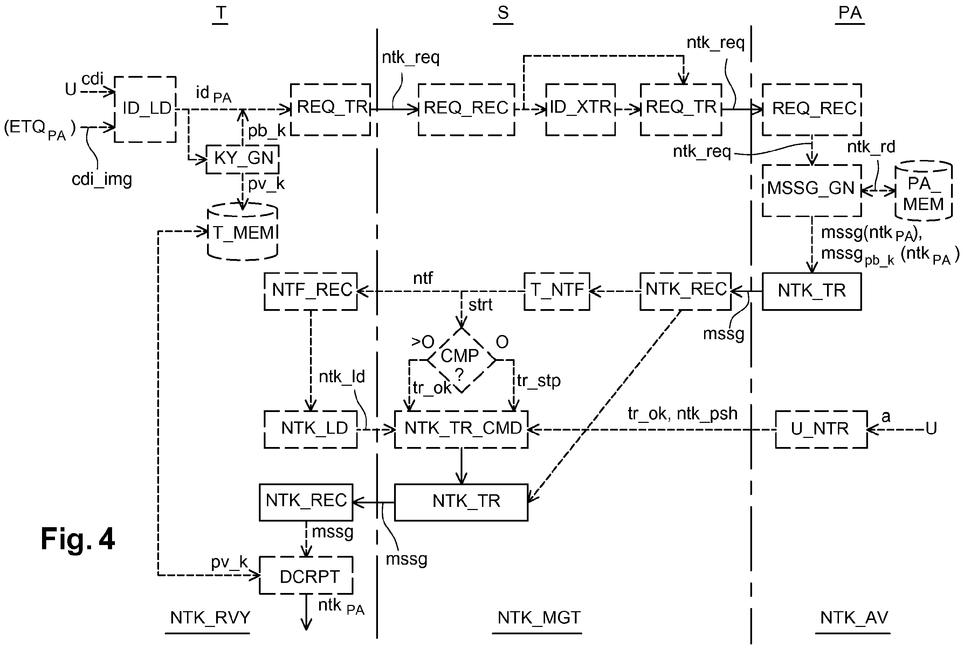

La figure 4 illustre un schéma simplifié des échanges dans une architecture de communication mettant en oeuvre les procédés de récupération d'une clé réseau NTK_RVY, de gestion de récupération d'une clé réseau NTK_MGT et de mise à disposition d'une clé réseau NTK_AV selon l'invention.
L'architecture de communication mettant en oeuvre l'invention comporte un terminal T que l'utilisateur U souhaite connecter à un point d'accès PA et un serveur S utilisé pour la récupération de la clé réseau.
En particulier, le terminal T met en oeuvre une identification ID_LD du point d'accès PA que l'utilisateur U souhaite connecter au terminal T mettant en oeuvre le procédé de récupération de clé réseau NTK_RVY.
Notamment, lorsqu'un utilisateur U souhaite connecter un terminal à un point d'accès PA, il saisit sur son terminal T un identifiant ou un code d'activation cdi lu sur le point d'accès PA, ou capture au moyen de son terminal T (photographie, scanne, etc.) un code d'activation du point d'accès PA. Le code d'activation est soit gravé soit imprimé sur le boitier du point d'accès PA ou sur une étiquette ETQ_{PA} apposée sur le boitier du point d'accès PA ou affiché sur un écran du point d'accès PA.
En particulier, lors de l'identification du point d'accès ID_LD, le terminal T transmet REQ_TR l'identifiant du point d'accès soit directement au serveur S dans la requête de clé réseau *ntk_req(id_{PA})* à destination du point d'accès, soit met en oeuvre une génération de clé de cryptage KY_GN en fonction de cet identifiant. Lorsque le terminal T met en oeuvre la génération de clé, il fournit alors au serveur S dans la requête de clé réseau *ntk_req(pb_k)* à destination du point d'accès une clé de cryptage clé *pb_k* en fonction de l'identifiant du point d'accès *id_{PA}.* Dans l'alternative où la requête de clé réseau comporte une clé de cryptage *pb_k,* cette clé de cryptage pb_k sera utilisée par le point d'accès pour crypter la clé réseau *ntk_{PA}* mise à disposition sur le serveur S par le point d'accès PA. Cette génération de clé de cryptage KY_GN est notamment comprise dans le procédé de récupération de clé réseau NTK_RVY.
En particulier, le serveur S mettant en oeuvre le procédé de gestion NTK_MGT de récupération de clé réseau reçoit REQ_REC la demande ou requête de clé réseau *nkt_req(id_{PA}), nkt_req(pb_k)* émise par le terminal T vers le serveur S à destination du point d'accès PA en fonction d'un identifiant du point d'accès *id_{PA}.*
En particulier, le serveur S met en oeuvre une extraction ID_XTR de l'identifiant du point d'accès de la requête de clé réseau *ntk_req.* L'identifiant de point d'accès extrait *id_{PA}* est fourni à la transmission de requête REQ_TR mise en oeuvre par le serveur S. La transmission de requête REQ_TR relaie alors la requête de clé réseau *ntk_req* reçue du terminal T au point d'accès PA ainsi identifié *id_{PA}.*
En particulier, le point d'accès PA mettant en oeuvre le procédé de mise à disposition d'une clé réseau NTK_AV reçoit REQ_REC la demande ou requête de clé réseau *nkt_req(id_{PA}), nkt_req(pb_k)* émise par le terminal T et relayée par le serveur S vers le point d'accès PA en fonction d'un identifiant du point d'accès *id_{PA}.*
En particulier, le point d'accès PA effectue une recherche NTK_SRCH de la clé réseau du point d'accès notamment dans une mémoire du point d'accès PA_MEM ou une base de données du point d'accès PA. La recherche NTK_SRCH de la clé réseau du point d'accès consiste notamment en la lecture de la clé réseau ntk_rd dans la mémoire PA_MEM ou tout autre dispositif de stockage du point d'accès.
Eventuellement, le point d'accès PA génère un message MSSG_GN à destination du terminal demandeur T. Le message *mssg* comporte au moins la clé réseau lue *ntk_{PA}* (dans la mémoire par exemple) et est éventuellement crypté par une clé *pb_k* reçue dans la requête de clé réseau *ntk_req(pb_k).* La génération de message MSSG_GN comporte alors notamment un cryptage (illustré par la figure 3) utilisant cette clé de cryptage *pb_k* fournie par la requête de clé réseau *ntk_req(pb_k).* Le cryptage mis en oeuvre par le terminal, crypte soit seulement la clé réseau *ntk_{PA},* soit tout ou partie du message généré *mssg* incluant la clé réseau *ntk_{PA}*
Le point d'accès PA transmet NTK_TR alors au serveur S soit directement la clé réseau *ntk_{PA}* cryptée ou non, soit le message généré *mssg* fournie par la génération de message MSSG_GN, c'est-à-dire un message crypté *mssg_{pb_k}(ntk_{PA})* ou non *mssg (ntk_{PA}).*
Suite à quoi, le serveur mettant en oeuvre le procédé de gestion NTK_MGT de récupération de clé réseau reçoit NTK_REC la clé réseau en provenance du point d'accès PA. Eventuellement, la réception de la clé réseau NTK_REC comporte un stockage (non illustré) dans une mémoire du serveur S de la clé réseau suite à une commande d'écriture de la clé réseau sur le serveur S émise par le point d'accès PA. La clé réseau est reçue par le serveur soit en propre *ntk_{PA},* soit dans un message *mssg,* et/ou crypté(e) au moyen de la clé de cryptage fournie par la requête de clé réseau *pb_k* ou non.
La réception de la clé réseau NTK_REC par le serveur S déclenche directement ou indirectement (c'est-à-dire avec des étapes intermédiaires) l'émission par le serveur S de la clé réseau NTK_TR au terminal demandeur T telle que reçue du point d'accès c'est-à-dire, respectivement, soit en propre *ntk_{PA},* soit dans un message *mssg,* et/ou crypté(e) au moyen de la clé de cryptage fournie par la requête de clé réseau *pb_k* ou non.
Dans le cas où l'émission de la clé réseau NTK_TR est déclenchée indirectement, le serveur S notifie de la disponibilité de la clé réseau T_NTF en transmettant un message de notification *ntf* au terminal T. Eventuellement, cette notification T_NTF résulte du stockage de la clé réseau reçue *ntk_{PA}* dans le serveur S soit par écriture par le point d'accès PA soit suite à la réception de la clé réseau par le serveur NTK_REC. La réception de la clé réseau par le serveur NTK_REC déclenche *ntf_trg* alors la notification T_NTF.
Suivant le type de notification *ntf,* le procédé de gestion NTK_MGT de récupération de clé réseau comporte une commande de transmission de la clé réseau NTK_TR_CMD en fonction d'au moins un des messages suivants :
- une demande chargement de la clé réseau *ntk_Id* reçue du terminal ;
- une autorisation de transmission *ok_tr* fournie par le point d'accès PA suite à une action de l'utilisateur du terminal T sur le point d'accès ;
- une commande distribution ntk_psh envoyée par le point d'accès PA suite à une action de l'utilisateur du terminal T sur le point d'accès ;
- une autorisation de transmission *ok_tr* fournie par un compteur déclenché par la notification T_NTF si la durée déterminée décomptée par le compteur n'a pas expirée ; etc.
Par exemple, après une notification par le serveur S de la mise à disposition de la clé réseau T_NTF, suivant le mode de fonctionnement du procédé de gestion de récupération de clé réseau NTK_MGT mis en oeuvre par le serveur auquel la clé est fournie, l'utilisateur U est amené à effectuer une action a sur le point d'accès PA. Le point d'accès PA capture la saisie utilisateur U_NTR et transmet une commande de distribution ntk_psh au serveur S. Le serveur S recevra la commande distribution *ntk_psh* envoyée par le point d'accès PA qui déclenchera l'étape de commande de transmission de la clé réseau NTK_TR_CMD.
Eventuellement, lorsque le serveur S met en oeuvre un décompte CMP d'une durée prédéterminée, l'étape de commande de transmission de la clé réseau NTK_TR_CMD suite à la réception de la commande distribution ntk_psh envoyée par le point d'accès PA ne sera déclenchée que si le décompte CMP n'est pas terminé (décompte supérieur strict à zéro >0) et donne une autorisation de transmission *tr_ok.* Par conséquent, l'étape de commande de transmission de la clé réseau NTK_TR_CMD recevant la commande distribution *ntk_psh* déclenchera *tr_trg* la transmission NTK_TR de la clé réseau su serveur S vers le terminal T.
Si le décompte CMP est terminé (décompte égal à zéro 0), il interdit la transmission tr_stp. Par conséquent, l'étape de commande de transmission de la clé réseau NTK_TR_CMD recevant la commande distribution *ntk_psh* ne déclenchera pas la transmission NTK_TR.

Un mode réalisation alternatif est, suite à la réception NTF_REC par le terminal T d'une notification *ntf* de disponibilité de la clé réseau *ntk_{PA}* émise par le serveur S, le terminal T met en oeuvre un chargement de la clé réseau NTK_LD qui envoie au serveur une commande chargement ntk_Id déclenchement l'émission par le serveur S de la clé réseau (cryptée ou non suivant le mode transmission de la requête de clé réseau mis en oeuvre par le procédé de récupération) suite à laquelle le procédé de récupération de clé réseau NTK_RVY comporte la réception de la clé réseau NTK_REC.
Eventuellement, soit la commande de transmission de la clé réseau NTK_TR_CMD mise en oeuvre par le serveur S déclenche *tr_trg* alors automatiquement la transmission NTK_TR de la clé réseau du serveur S au terminal T, soit la commande de transmission de la clé réseau NTK_TR_CMD mise en oeuvre par le serveur S attend, avant de déclencher *tr_trg* la transmission NTK_TR de la clé réseau du serveur S au terminal T, une autorisation tr_ok du point d'accès PA et/ou du décompte CMP.
Par exemple, après notification de la mise à disposition de la clé réseau T_NTF, lorsque l'utilisateur U effectue une action prédéterminée sur le point d'accès PA à un instant donné relatif à la demande de chargement *ntk_Id* (avant, simultanément ou après), le point d'accès PA capture la saisie utilisateur U_NTR et transmet une autorisation de transmission tr_ok au serveur S. Le procédé de gestion NTK_MGT de récupération de clé réseau recevra une autorisation de transmission *tr_ok* envoyée par le point d'accès PA qui déclenchera l'étape de commande de transmission de la clé réseau NTK_TR_CMD.
Eventuellement, lorsque le procédé de gestion NTK_MGT de récupération de clé réseau comporte un décompte CMP d'une durée prédéterminée, l'étape de commande de transmission de la clé réseau NTK_TR_CMD suite à la réception de la demande de chargement envoyée par le terminal T ne sera déclenchée que si le décompte CMP n'est pas terminé (décompte supérieur strict à zéro >0) et donne une autorisation de transmission *tr_ok.* Par conséquent, l'étape de commande de transmission de la clé réseau NTK_TR_CMD recevant la demande de chargement *ntk_Id* déclenchera *tr_trg* la transmission NTK_TR de la clé réseau su serveur S vers le terminal T.
Si le décompte CMP est terminé (décompte égal à zéro 0), il interdit la transmission tr_stp. Par conséquent, l'étape de commande de transmission de la clé réseau NTK_TR_CMD recevant la commande distribution *ntk_psh* ne déclenchera pas la transmission NTK_TR.
Eventuellement, la transmission NTK_TR sera déclenchée suite à la demande de chargement ntk_Id que si à la fois le point d'accès PA et le décompte CMP l'autorise *tr_ok.* La transmission NTK_TR ne sera pas effectuée suite à la demande de chargement ntk_Id si au moins le décompte CMP l'interdit *tr_stp* (car la demande de chargement *ntk_Id* et/ou l'autorisation de transmission du point d'accès *tr_ok* est(sont) reçue(s) alors que le temps prédéterminé de chargement a expiré) ou si le point d'accès PA n'envoie pas d'autorisation *tr_ok.*
Dans le cas où la clé réseau reçue *ntk_{PA}* est soit directement cryptée *ntk_{PA,pb_k}* soit incluse dans un message cryptée *mssg_{pb_k}(ntk_{PA)},* le terminal T décrypte la clé réseau DCRPT fournissant respectivement la clé réseau ntk_{PA}, ou le message décrypté mssg dont est extraite (NTK_XTR non illustré) la clé réseau ntk_{PA}.

Ainsi, les procédés mis en oeuvre permettent de récupérer la clé réseau, notamment une clé Wifi, d'un point d'accès de manière automatique, sécurisée et transparente pour l'utilisateur via un dispositif du terminal tel qu'une application mise en oeuvre par le processeur du terminal, notamment un smartphone, une tablette, etc.
Eventuellement, la récupération de la clé réseau selon l'invention repose sur une action sur le point d'accès afin d'envoyer la clé réseau au terminal demandeur suite à une demande utilisateur ou client après la saisie ou la capture d'un code QR ou d'un code d'activation.
La récupération de la clé réseau selon l'invention est utilisable par les points d'accès ne comportant pas d'écran, les étapes de récupération de la clé et de connexion au point d'accès étant reproduit par le terminal et plus particulièrement au moyen du récupérateur de clé réseau du terminal.
La récupération de la clé réseau peut être mise en oeuvre par des programmes exécutant les étapes des procédés décrits ci-dessus. Dans ce cas, la récupération de la clé réseau met en oeuvre trois briques de procédés/programmes :
- un procédé mis en oeuvre par le terminal notamment sous la forme d'une application mobile ;
- un procédé mis en oeuvre par le point d'accès notamment sous la forme d'une application du point d'accès ou « box » ; et
- un procédé mis en oeuvre par un serveur tel qu'une plateforme de service, notamment de type https.

Les avantages de la récupération de clé réseau selon l'invention sont notamment :
- sa simplicité puisque l'utilisateur n'a plus à saisir la clé alphanumérique WEP, WAP ou WAP2 : il l'a recevra automatiquement sur son terminal 1 du point d'accès 3 ;
- un simple appui sur une interface du point d'accès permettra de récupérer la clé réseau de manière sécurisé notamment sur le bouton WPS, ce qui n'est pas le cas aujourd'hui (c'est même le point de faiblesse de la sécurité de ces connexions au réseau Wifi);
- la clé réseau n'est jamais visible sur le réseau domestique, c'est-à-dire le réseau entre le terminal 1 et le pont d'accès 2 puisque la clé réseau transite sur un autre réseau, tel que le réseau mobile et peut être encryptée ;
- la sécurité :
   ∘ la clé de cryptage ou clé utilisateur permet de sécuriser la transmission de la clé réseau ; et/ou
   ∘ l'action physique de l'utilisateur sur le point d'accès permet de s'assurer que l'utilisateur est à proximité du point d'accès dont il demande la récupération de la clé réseau et dont probablement son propriétaire.

La figure 5 illustre un schéma simplifié des échanges selon l'invention dans un mode réalisation particulier.
Notamment, le terminal T comporte un dispositif de connexion à un point d'accès T_APP notamment sous la forme d'un processeur ou calculateur mettant en oeuvre les étapes d'un procédé de récupération de clé réseau tel qu'illustré par la figure 1. Il s'agit notamment d'une application pour terminal mobile tel que smartphone, tablette, etc.
Dans un premier temps, l'utilisateur U démarre (étape non illustrée) le dispositif de connexion à un point d'accès T_APP notamment en lançant l'application mobile (par exemple l'application MyLiveBox, marque déposée).
Puis, le dispositif de connexion T_APP propose un menu de configuration d'accès ou configuration Internet permettant notamment de déterminer les points d'accès aux quels le terminal peut être connecté (car dans la zone de portée de liaison sans fil par exemple). Cette détermination consiste notamment à une découverte des points d'accès tels que prévu de manière standardisée par le réseau.
L'utilisateur sélectionne (non illustré) le point d'accès PA, par exemple sa LiveBox (marque déposée), dans la liste des points d'accès disponibles (la liste peut comporter aucun, un ou plusieurs points d'accès) auquel il souhaite connecter son terminal T. Le dispositif de connexion T_APP invite (non illustré) alors l'utilisateur à entrer un identifiant ou un code d'activation du point d'accès, notamment à scanner le QR-code disponible sur le boitier physique du point d'accès PA. Notamment, l'utilisateur U capture ID_CPT au moyen de son terminal T (photographie, scanne, etc.) un code d'activation du point d'accès PA. Le code d'activation est soit gravé soit imprimé sur le boitier du point d'accès PA ou sur une étiquette apposée sur le boitier du point d'accès PA ou affiché sur un écran du point d'accès PA. Le code d'activation est notamment une série de caractères (chiffres, lettres ou symboles), un code barre, un code QR, etc. Dans le cas où le code d'activation cdi est capturé, le procédé de récupération de clé réseau NTK_RVY comporte la capture ID_CPT du code d'activation *cdi,* notamment sous la forme d'une image *cdi_img.*
En particulier, dans ce cas où le point d'accès PA est identifié par un code d'activation *cdi,* le procédé de récupération de clé réseau NTK_RVY comporte une extraction ID_XTR de l'identifiant du point d'accès *id_{PA}* du code d'activation. Le QR-code *cdi* est décodé par le dispositif de connexion T_APP et comporte un identifiant du point d'accès PA (numéro de série ou Adresse Mac par exemple).
La récupération de la clé réseau selon l'invention est ainsi automatisée, sécurisée et transparente pour l'utilisateur grâce au procédé mis en oeuvre, notamment sous forme d'une application, par le terminal, tel qu'une tablette ou un smartphone. En particulier, la récupération de la clé réseau repose sur une action sur le point d'accès tel qu'une « box » afin de renvoyer la clé réseau au terminal, notamment à l'application mise en oeuvre par le terminal, suite à une demande utilisateur ou client après la saisie ou capture (notamment scan) d'un code d'activation ou d'un code QR.
Le procédé de mise à disposition de clé réseau mis en oeuvre par le point d'accès ne nécessite pas que le point d'accès soit équipé d'un écran ou de moyen d'affichage de support sur le point d'accès. En effet, le procédé de récupération de clé réseau mis en oeuvre par le terminal permet à l'utilisateur de suivre les étapes de connexion au point d'accès sans consulter des moyens de reproduction du point d'accès.
En particulier, l'utilisateur ou client récupèrera la clé réseau, par exemple une clé Wifi, après une demande via un procédé de récupération, tel qu'une application mobile, mise en oeuvre par le terminal (smartphone ou tablette de l'utilisateur/du client). Cette récupération de clé réseau fait appel à trois briques, notamment implémentant sous forme de trois briques logicielles exécutant les étapes des procédés suivants :
- un procédé de récupération mis en oeuvre par le terminal, notamment sous la forme d'une application mobile ;
- un procédé de mise à disposition de clé réseau mis en oeuvre par un point d'accès, notamment une application au niveau de la « box » ; et
- un procédé de gestion de la récupération de clé réseau mis en oeuvre par un serveur tel qu'une plateforme de service de type https.
Dans l'exemple de la figure 5, l'extraction de l'identifiant du code d'activation ID_XTR requiert *cdi_req* l'identifiant à un serveur S. Le serveur S effectue alors une lecture ID_RD en fonction du code d'identification *cdi* reçu dans la requête *cdi_req* de l'identifiant du point d'accès *id_{PA}* dans une base de données de code d'activation, notamment de code QR QR_BDD par le serveur S et renvoie l'identifiant lu *id_{PA}* au terminal T, en particulier au dispositif de connexion T_APP. La requête d'identifiant cdi_req est notamment constitué d'une requête http comportant l'adresse du serveur S et le code d'activation, par exemple https:\S\cdi. Le serveur est notamment le serveur S utilisé pour la récupération de la clé réseau ou un autre serveur.
L'identifiant du point d'accès *id_{PA}* est notamment un identifiant unique tel que le « Tenant Id » utilisé dans le domaine de l'internet des objets (cloud IoT en anglais), il peut être constitué par une adresse MAC ou un identifiant unique universel (UUID ou universal unique identifier en anglais) généré éventuellement aléatoirement.
Sur la base de cette identifiant *id_{PA},* une clé A est générée et une requête de clé réseau *ntk_req* est envoyé vers le serveur S par exemple sur une adresse spécifique comportant l'adresse du serveur S et l'identifiant du point d'accès *id_{PA}.*
En particulier, le dispositif de connexion du terminal T_APP effectue un hachage HSH d'une concaténation de l'identifiant du point d'accès *id_{PA}* reçu du serveur S et d'un identifiant du terminal, tel que le code d'identification international de terminal mobile ou code IMEI (pour International Mobile Equipment Identity en anglais). Eventuellement un nombre aléatoire s est ajouté à cette concaténation avec de la hacher. Ce nombre aléatoire est aussi appelé salage ou salt en anglais.
En particulier, l'identifiant du point d'accès id_{PA} est fourni à une génération de clé de cryptage KY_GN qui fournit alors au serveur S dans la requête de clé réseau *ntk_req(pb_k)* à destination du point d'accès une clé de cryptage *pb_k* en fonction de l'identifiant du point d'accès *id_{PA}.* Dans notre exemple de la figure 5, la clé de cryptage est générée KY_GN en fonction du résultat *h(id_{PA},IMEI,s)* du hachage de la concaténation de l'identifiant du point d'accès *id_{PA}* reçu du serveur S et d'un identifiant du terminal IMEI et du salage s. Dans le cas d'une génération de clés asymétrique, au moins la clé privé A' est stockée dans la mémoire du terminal T_MEM et la clé publique A est transmise au serveur S. Eventuellement, le couple de clé A, A' est stocké dans la mémoire du terminal T_MEM.
L'avantage du salage s est qu'il évite de régénère les mêmes clés de cryptage sur différents appairages du même terminal au même point d'accès.

Le serveur S récupère REQ_REC la requête *ntk_req* et grâce à l'identifiant unique *id_{PA}* notifie le point d'accès PA concerné, notamment en relayant la requête de clé réseau provenant du terminal *ntk_req* ou en générant sa notification de demande de clé réseau *ntk_req_ntf* (non illustré) comportant notamment la clé de cryptage A.
Le point d'accès PA renvoie sa clé réseau, notamment clé WEP, WAP ou WAP2, au serveur S de manière crypté sur la base de la clé publique A transmis par le dispositif de connexion du terminal T_APP.
En particulier, le point d'accès PA effectue, suite à la réception REQ_REC de la notification *ntk_req_ntf,* une recherche NTK_SRCH de la clé réseau du point d'accès PA notamment dans une mémoire du point d'accès PA_MEM ou une base de données du point d'accès PA. La recherche NTK_SRCH de la clé réseau du point d'accès consiste notamment en la lecture de la clé réseau ntk_rd dans la mémoire PA_MEM ou tout autre dispositif de stockage du point d'accès.
Eventuellement, le point d'accès PA procède à une génération de message MSSG_GN à destination du terminal demandeur T. Le message mssg comporte au moins la clé réseau lue *ntk_{PA}* (dans la mémoire par exemple) et est éventuellement crypté par une clé *pb_k* reçue dans la requête de clé réseau *ntk_req(pb_k).* La génération de message MSSG_GN comporte alors notamment un cryptage CRPT utilisant cette clé de cryptage *pb_k* fournie par la requête de clé réseau *ntk_req(pb_k).* Le cryptage CRPT crypte soit seulement la clé réseau *ntk_{PA},* soit tout ou partie du message généré *mssg* incluant la *ntk_{PA}*.
Le point d'accès PA transmet la clé réseau NTK_TR alors au serveur S soit directement la clé réseau *ntk_{PA}* cryptée ou non, soit le message généré *mssg* fournie par la génération de message MSSG_GN, c'est-à-dire un message crypté *mssg_{A}(ntk_{PA})* ou non *mssg (ntk_{PA}).* Dans le mode de réalisation de la figure 5, le message transmis est crypté. La transmission de la clé réseau NTK_TR par le point d'accès, constituant une mise à disposition de la clé réseau par le point d'accès PA sur le serveur S, est notamment un dépôt de la clé réseau NTK_PST qui écrit la clé réseau directement dans une mémoire du serveur S_MEM comme l'illustre la figure 5
Le dispositif de connexion du terminal T_APP est notifiée *ntf* du dépôt de la clé réseau, notamment la clé Wifi dans notre exemple d'un point d'accès constitué par une LiveBox, au niveau du serveur S. Le dépôt de la clé réseau par le point d'accès NTK_PST déclenche *ntf_trg* alors la notification T_NTF ou notification de dépôt PST_NTF.
En particulier, le dispositif de connexion du terminal T_APP reproduit DSP_NTF la notification reçue ntf. Ainsi, l'utilisateur est informé que la clé réseau est disponible sur le serveur et qu'il doit éventuellement effectuer une ou plusieurs actions parmi les suivantes notamment dans un temps limité :
- effectuer une action a sur le point d'accès PA ;
- demander le chargement de la clé réseau ; etc.
Eventuellement, le terminal reproduit un compte à rebours mis en oeuvre par le dispositif de connexion T_APP pour mettre en oeuvre cette limite temporelle. Ainsi, faute de faire l'action demandée par la notification notamment d'appuyer à temps, les informations (par exemple le message crypté contenant la clé réseau) coté serveur sont purgées. Dans l'exemple de la figure 5, ce délai peut aller de quelques secondes à quelques minutes.
Dans le cas où une action sur le point d'accès est demandée, lorsque l'utilisateur effectue cette action a, par exemple appuie sur une touche BT_PSH du point d'accès PA, tel que le bouton WPS, le point d'accès capture U_NTR l'action a et :
- soit commande au serveur S la distribution de la clé réseau ntk_psh,
- soit autorise ACK la récupération de la clé réseau auprès du serveur.
Dans le cas d'une commande de distribution *ntk_psh,* le serveur S transmet alors la clé réseau *ntk_{PA}, _{A}* cryptée au dispositif de connexion terminal T_APP. Dans le cas d'une autorisation de récupération, le dispositif de connexion terminal T_APP commande le chargement de la clé réseau ntk_Id auprès du serveur S qui la transmet au dispositif de connexion terminal T_APP puisqu'il a reçu l'autorisation du point d'accès PA.
La clé réseau est reçue par le terminal via le réseau mobile (4G, 3G, LTE ...)
Le dispositif de connexion terminal T_APP reçoit NTK_REC la clé réseau et la décrypte DCRPT au moyen de la clé privé A' préalablement stockée. Le dispositif de connexion terminal T_APP effectue alors la première connexion au point d'accès PA_ACT au moyen de la clé réseau décryptée *ntk_{PA}.* Le terminal T est apparié au point d'accès PA.

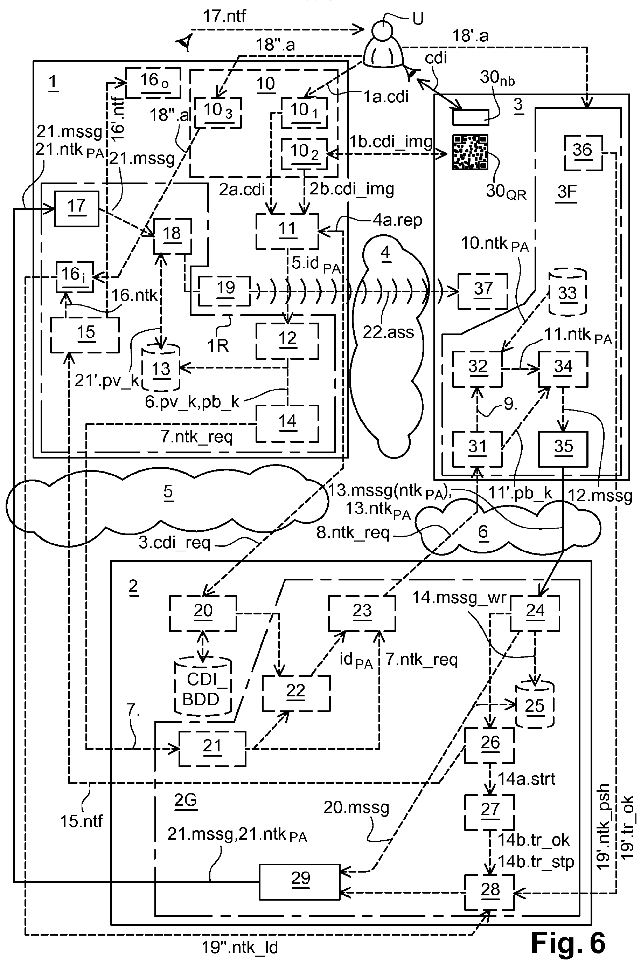

La figure 6 illustre un schéma simplifié d'une architecture de communication comportant un terminal, un serveur et un point d'accès selon l'invention.
L'architecture de communication mettant en oeuvre l'invention comporte un terminal 1 que l'utilisateur U souhaite connecter à un point d'accès 3 via un premier réseau de communication 4, notamment un réseau de communication sans fil tel que Wifi, et un serveur 2 utilisé pour la récupération de la clé réseau.
Le terminal 1 comporte une interface 1R de récupération d'une clé réseau d'un point d'accès *ntk_{PA}* à un réseau. La clé réseau *ntk_{PA}* permet au terminal 1 d'être associé au point d'accès 3 lors d'une première connexion du terminal 1 au point d'accès 3. L'interface de récupération 1R comportant un récepteur 17 d'une clé réseau *21.ntk_{PA}* mise à disposition par un point d'accès 3 sur un serveur 2 suite à une demande *7.ntk_req* par le terminal 1 au serveur 2 de la clé réseau du point d'accès. La demande *7.ntk_req* comporte un identifiant du point d'accès *id_{PA}* et est relayée par le serveur 2 au point d'accès 3 associé à l'identifiant du point d'accès *id_{PA}* de la demande *7.ntk_req.*
Le serveur 2 comporte un gestionnaire 2G de récupération d'une clé réseau d'un point d'accès à un réseau *ntk_{PA}.* La clé réseau *ntk_{PA}* permet au terminal 1 d'être associé au point d'accès 3 lors d'une première connexion du terminal 1 au point d'accès 3. Le gestionnaire 2G de récupération de clé réseau comportant un émetteur 29 vers un terminal 1 d'une clé réseau *21.ntk_{PA}* mise à disposition par un point d'accès 3 sur le serveur 2 suite à une demande *7.ntk_req* par le terminal 1 au serveur 2 de la clé réseau du point d'accès. La demande *7.ntk_req* comporte un identifiant du point d'accès *id_{PA}* et est relayée par le serveur 2 au point d'accès 3 associé à l'identifiant du point d'accès *id_{PA}* de la demande *7.ntk_req.*

Le point d'accès 3 à un réseau comportant un fournisseur 3F de clé réseau apte à mettre à disposition d'un terminal 1 d'une clé réseau d'un point d'accès *ntk_{PA}* à un réseau est mis en oeuvre par un point d'accès 3. La clé réseau *ntk_{PA}* permet au terminal 1 d'être associé au point d'accès 3 lors d'une première connexion du terminal 1 au point d'accès 3. Le fournisseur 3F de clé réseau comportant un émetteur 35 vers un serveur 2 à destination d'un terminal 1 d'une clé réseau *13.ntk_{PA}* suite à une demande *7.ntk_req* par le terminal 1 au serveur 2 de la clé réseau du point d'accès 3. La demande *7.ntk_req* comporte un identifiant du point d'accès *id_{PA}* et est relayée par le serveur 2 au point d'accès 3 associé à l'identifiant du point d'accès *id_{PA}* de la demande *7.ntk_req.* En particulier, le terminal 1 comporte un identificateur 11 du point d'accès 3 que l'utilisateur U souhaite connecter au terminal 1.
Notamment, lorsqu'un utilisateur U souhaite connecter un terminal 1 à un point d'accès 3, il utilise une interface de saisie 10₁ de son terminal 1 pour entrer un identifiant ou un code d'activation *1a.cdi* lu sur le point d'accès 3, ou un capteur 10₂ de son terminal 1 pour capter (photographie, scanne, etc.) un code d'activation *cdi* du point d'accès 3, notamment sous la forme d'une image *1b.cdi_img.* Le code d'activation est soit gravé soit imprimé sur le boitier du point d'accès 3 ou sur une étiquette 30_{nb}, 30_{QR} apposée sur le boitier du point d'accès 3 ou affiché sur un écran du point d'accès 3, soit sous la forme d'une série alphanumérique dans le cas de l'étiquette 30nb ou d'un code barre ou QR dans le cas de l'étiquette 30_{QR}. Notamment, l'interface utilisateur 10 du terminal 1 comporte une interface de saisie 10₁ et/une interface de capture 10₂ et fournit code d'activation du point d'accès 3, respectivement *2a.cdi, 2b.cdi_img.*
En particulier, le terminal 1 comporte un extracteur d'identifiant de point d'accès 11 à partir du code d'activation *2a.cdi, 2b.cdi_img* fourni par l'interface utilisateur 10. L'extracteur 11 requiert notamment l'identifiant correspondant *3.cdi_req* auprès du serveur 2 ou d'un autre serveur (non illustré). Le serveur 3 comporte en particulier un moteur de recherche 20 apte à lire dans une base de données de point d'accès CDI_BDD l'identifiant de point d'accès correspondant au code d'identification reçu et de le transmettre au terminal 1 en réponse *4.rep.*
En particulier, le terminal 1 comporte un générateur de clés de cryptage 12, tel que des clés asymétriques fournissant notamment un couple clé privée, clé publique : *6.(pv_k,pb_k).* Les clés sont générées en fonction de l'identifiant du point d'accès *id_{PA}* du point d'accès 3. Au moins la clé privé *pv_k* est stockée dans la mémoire du terminal 13.
En particulier, le terminal 1 transmet REQ_TR soit directement l'identifiant du point d'accès dans la requête de clé réseau *7.ntk_req* soit de manière cryptée. Le terminal 1 comporte notamment un générateur de clés 12 transmettant une clé de cryptage *pb_k* générée en fonction de l'identifiant du point d'accès 3. Le terminal comporte un émetteur 14 vers le serveur 2. L'émetteur 2 émet cet identifiant du point d'accès 3 soit directement dans la requête de clé réseau *7.ntk_req(id_{PA})* à destination du point d'accès 3, soit indirectement en émettant dans la requête de clé réseau *7.ntk_req(pb_k)* la clé de cryptage générée en fonction de cet identifiant. Dans l'alternative où la requête de clé réseau *7.ntk_req(pb_k)* comporte une clé de cryptage *pb_k,* cette clé de cryptage pb_k sera utilisée par le point d'accès 3 pour crypter la clé réseau *ntk_{PA}* mise à disposition sur le serveur 2 par le point d'accès 3.

En particulier, le serveur 2 comporte un récepteur 21 de la demande ou requête de clé réseau *7.nkt_req(id_{PA}), 7.nkt_req(pk_k)* émise par le terminal 1 vers le serveur 2 à destination du point d'accès 3 en fonction d'un identifiant du point d'accès *id_{PA}.*
En particulier, le serveur 2 comporte notamment un extracteur 22 de l'identifiant du point d'accès de la requête de clé réseau *7.ntk_req.* L'identifiant de point d'accès extrait *id_{PA}* est fourni à un émetteur 23 de requête du serveur 2. L'émetteur de requête 23 relaie alors la requête de clé réseau *8.ntk_req* reçue du terminal 1 ou transmet une notification de requête de clé réseau (non illustrée) au point d'accès 3 ainsi identifié *id_{PA}.*
En particulier, le point d'accès 3 comporte un récepteur 31 de la demande ou requête de clé réseau *8.nkt_req(id_{PA}), 8.nkt_req(pb_k)* relayée par le serveur 2 vers le point d'accès 3 et fonction d'un identifiant du point d'accès *id_{PA}.*
En particulier, le point d'accès 3 comporte un moteur de recherche 32 de la clé réseau du point d'accès *10.ntk_{PA}* notamment dans une mémoire du point d'accès 33 ou une base de données du point d'accès 33. Eventuellement, le point d'accès 3 comporte un générateur 34 de message à destination du terminal demandeur 1. Le message *12.mssg* comporte au moins la clé réseau lue *ntk_{PA}* (dans la mémoire par exemple) et est éventuellement crypté par une clé *pb_k* reçue dans la requête de clé réseau *8.ntk_req(pb_k).* Le générateur de message 34 comporte alors notamment un codeur 34+(non illustré) utilisant cette clé de cryptage *pb_k* fournie par la requête de clé réseau *8.ntk_req(pb_k).* Le codeur 34+, crypte soit seulement la clé réseau *ntk_{PA},* soit tout ou partie du message généré *12.mssg* incluant la *ntk_{PA}*.
Le point d'accès 3 comporte un émetteur 35 qui transmet alors au serveur 2 soit directement la clé réseau *ntk_{PA}* cryptée ou non, soit le message généré *12.mssg* fournie par la génération de message MSSG_GN, c'est-à-dire un message crypté *mssg_{pb_k}(ntk_{PA})* ou non *mssg (ntk_{PA}).*
Suite à quoi, le serveur 2 comportant un récepteur 24 reçoit la clé réseau en provenance du point d'accès PA. Eventuellement, le serveur 2 stocke dans une mémoire du serveur 25 la clé réseau suite à une commande d'écriture de la clé réseau 14.mssg_wr sur le serveur 2, notamment émise par le point d'accès 3.
Le récepteur de la clé réseau 24 déclenche directement ou indirectement l'émetteur 24 qui transmet *21.mssg, 21.ntk_{PA}* la clé réseau au terminal demandeur 1 telle que reçue du point d'accès 3. Dans le cas où l'émission de la clé réseau NTK_TR est déclenchée indirectement, le serveur 2 comporte un générateur de notification 26 qui notifie le terminal 1 de la disponibilité de la clé réseau en transmettant un message de notification *15.ntf* au terminal 1. Eventuellement, cette notification *15.ntf* résulte du stockage de la clé réseau reçue dans le serveur 2 soit par écriture par le point d'accès 3 *14.mssg_wr* soit suite à la réception *13.mssg* de la clé réseau par le serveur 2. Suivant le type de notification *15.ntf,* le terminal 1 comporte un récepteur de notification 15 et un reproducteur de notification 16o (notamment un écran affichant un message textuel et/ou image et/ou vidéo et/ou un haut-parleur) qui indique *17.ntf* à l'utilisateur d'éventuelles actions à accomplir pour obtenir la clé réseau disponible sur le serveur 2.
Le terminal 1 comporte notamment un chargeur de clé réseau 16i déclenché soit automatiquement par le récepteur de notification 15, soit sur commande de l'utilisateur après une action 18'.a de l'utilisateur U sur une interface du terminal 10₃ suivant le contenu de la notification *15.ntf.* Le chargeur de clé réseau 16i envoie une commande de chargement *19".ntk_Id* à un contrôleur de transmission 28 du serveur 2.
Eventuellement, le point d'accès 3 comporte un superviseur 36 qui sur commande de l'utilisateur après une action *18".a* de l'utilisateur U sur une interface du point d'accès (non illustrée) émet soit une commande de distribution *19'.ntk_psh* ou une autorisation de transmission *19'.tr_ok* suivant le contenu de la notification *15.ntf* à un contrôleur de transmission 28 du serveur 2.
Le contrôleur de transmission 28 commande la transmission de la clé réseau en fonction d'au moins un des messages suivants :
- une demande chargement de la clé réseau 19"*.ntk_Id* reçue du terminal 1;
- une autorisation de transmission 19'.*ok_tr* fournie par le point d'accès 3 suite à une action de l'utilisateur du terminal 1 sur le point d'accès 3 ;
- une commande distribution 19'.ntk_psh envoyée par le point d'accès 3 suite à une action de l'utilisateur du terminal 1 sur le point d'accès 3 ;
- une autorisation de transmission 19"'.*ok_tr* founie par un compteur 27 du serveur 2 et déclenché par le générateur de notification 26 si la durée déterminée décomptée par le compteur n'a pas expirée ; etc.
Par exemple, après une notification *15.ntf* par le serveur 2 de la mise à disposition de la clé réseau, suivant le mode de fonctionnement gestionnaire 2G de récupération de clé réseau NTK_MGT auquel la clé est fournie, l'utilisateur U est amené à effectuer une action a sur le point d'accès 3. Le point d'accès 3 comporte un superviseur 36 capturant la saisie utilisateur et transmettant une commande de distribution ntk_psh au serveur 2. Le serveur 2 recevra la commande distribution *19'.ntk_psh* envoyée par le point d'accès 3 qui déclenchera la commande par le contrôleur de transmission 28 de la transmission de la clé réseau *21.mssg.*
Eventuellement, lorsque le serveur 2 active *14a.strt* un compteur 27 d'une durée prédéterminée, le contrôleur de transmission 28 ne sera déclenchée, suite à la commande distribution *19'.ntk_psh* envoyée par le point d'accès 3 que si le décompte du compteur 27 n'est pas terminé (décompte supérieur strict à zéro >0) et donne une autorisation de transmission *14b.tr_ok.* Alors seulement, le contrôleur de transmission 28 recevant la commande distribution *19'.ntk_psh* déclenchera l'émetteur 29 de la clé réseau du serveur 2 vers le terminal 1.
Si le compteur 27 a terminé son décompte (décompte égal à zéro 0), il interdit la transmission *14b.tr_stp.* Par conséquent, le contrôleur de transmission 28 recevant la commande distribution *19'.ntk_psh* ne déclenchera pas l'émetteur 29.
Dans le cas où la clé réseau reçue *ntk_{PA}* est soit directement cryptée *ntk_{PA,pb_k}* soit incluse dans un message cryptée mssg*_{pb_k}(ntk_{PA)},* le terminal 1 comporte un décodeur 158 apte à décrypter la clé réseau en utilisant la clé stocké dans la mémoire 13 et fournissant respectivement la clé réseau ntk_{PA}, ou le message décrypté mssg dont est extraite (NTK_XTR non illustré) la clé réseau ntk_{PA}. Alors le terminal 1 comporte un connecteur réseau 19 apte à connecter *22.ass* le terminal 1 via le premier réseau de communication 4 au point d'accès 2 en utilisant la clé réseau reçue (et éventuellement décryptée).

Les échanges entre le terminal 1 et le serveur 2 sont effectuées via un deuxième réseau de communication 5 distinct du premier réseau de communication 4, notamment un réseau de communication mobile plus sûre que le réseau Wifi utilisé comme premier réseau de communication 4.
Les échanges entre le serveur 2 et le point d'accès 3 sont effectués via un troisième réseau de communication 6 distinct du premier réseau de communication 4, notamment un réseau de communication mobile différent ou identique au deuxième réseau de communication ou un réseau de communication filaire.
Le système mettant en oeuvre l'invention, à savoir le terminal 1, le point d'accès 3 et le serveur 2, repose, dans sa version la plus sécurisée, sur de l'encryptage et de l'identification de l'usager depuis le point d'accès avec une validation par une action « physique » sur le point d'accès pour éviter des usurpations de clés.
En particulier, le système se compose des éléments suivants :
- un terminal 1 comportant un processeur mettant en oeuvre une application mobile exécutant les étapes du procédé de récupération de clé réseau NTK_RVY;
- un serveur 2 qui servira de stockage de la clé de cryptage pour le point d'accès 3et de la clé réseau pour le terminal 1 ;
- un ensemble de point d'accès (tels que des box internet reliées à un réseau Internet) dont le point d'accès 3 auquel l'utilisateur souhaite connecter le terminal 1 ;
- un code d'activation (tel qu'un code QR) afficher ou apposé sur le point d'accès et permettant de faire le lien entre le terminal 1 et le point d'accès choisi 3.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur. D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet. Alternativement, le support d'informations peut être un circuit intégré dans lequel le programme est incorporé, le circuit étant adapté pour exécuter ou pour être utilisé dans l'exécution du procédé en question.
Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé de récupération d'une clé réseau d'un point d'accès à un réseau mis en oeuvre par un terminal, la clé réseau permettant au terminal d'être associé au point d'accès lors d'une première connexion du terminal au point d'accès, le procédé de récupération de clé réseau comportant une réception par le terminal d'une clé réseau mise à disposition par un point d'accès sur un serveur suite à une demande par le terminal au serveur de la clé réseau du point d'accès, la demande comportant un identifiant du point d'accès et ayant été relayée par le serveur au point d'accès Associé à l'identifiant du point d'accès de la demande.

2. Procédé de récupération d'une clé réseau selon la revendication précédente, **caractérisé en ce que** la clé réseau reçue par le terminal est incluse dans un message crypté transmis par le point d'accès au serveur.

3. Procédé de récupération d'une clé réseau selon l'une quelconque des revendications précédentes, **caractérisé en ce que** le procédé de récupération de clé réseau comporte un décryptage, au moyen d'une clé privé générée par le terminal *avec* une clé publique à partir d'un identifiant du point d'accès, du message crypté émis par le point d'accès au serveur, le message ayant été crypté avec la clé publique transmise par le terminal à destination du point d'accès et comportant la clé réseau du point d'accès.

4. Procédé de récupération d'une clé réseau selon l'une quelconque des revendications précédentes, **caractérisé en ce que** le procédé de récupération de clé réseau comporte une génération d'un couple de clés asymétriques comportant une clé publique et une clé privé générées à partir d'un identifiant du point d'accès, la clé publique constituant l'identifiant de point d'accès compris dans la demande et cryptant la clé réseau reçue par le terminal.

5. Procédé de récupération d'une clé réseau selon l'une quelconque des revendications précédentes, **caractérisé en ce que** le procédé de récupération de clé réseau comporte une transmission d'une clé publique générée à partir d'un identifiant du point d'accès à destination du point d'accès, la clé publique constituant l'identifiant de point d'accès compris dans la demande et cryptant la clé réseau reçue par le terminal.

6. Procédé de récupération d'une clé réseau selon l'une quelconque des revendications précédentes, **caractérisé en ce que** le procédé de récupération de clé réseau comporte une réception d'un message provenant du point d'accès, le message étant crypté avec une clé publique et comportant la clé réseau, la clé publique générée à partir d'un identifiant du point d'accès constituant l'identifiant de point d'accès compris dans la demande.

7. Procédé de récupération d'une clé réseau selon l'une quelconque des revendications précédentes, **caractérisé en ce que** la clé réseau est reçue par le terminal, via un réseau distinct du réseau associé à la clé réseau, du serveur communicant, via un réseau distinct du réseau associé à la clé réseau, avec le point d'accès ayant émis la clé réseau.

8. Procédé de récupération d'une clé réseau selon l'une quelconque des revendications précédentes, **caractérisé en ce que** le procédé de récupération de clé réseau comporte une réception par le terminal d'une notification de disponibilité de la clé réseau émise par le serveur suite à une réception par le serveur de la clé réseau provenant du point d'accès, ladite réception de la notification autorisant le terminal à récupérer la clé réseau auprès du serveur.

9. Procédé de récupération d'une clé réseau selon l'une quelconque des revendications précédentes, **caractérisé en ce que**, après la mise à disposition de la clé réseau sur le serveur par le point d'accès, la réception de la clé réseau par le terminal est déclenchée par le point d'accès suite à une action physique sur le point d'accès d'un utilisateur du terminal.

10. Procédé de récupération d'une clé réseau selon l'une quelconque des revendications précédentes, **caractérisé en ce que** la mise à disposition de la clé réseau sur le serveur par le point d'accès PA a une durée limitée.

11. Procédé de gestion de récupération d'une clé réseau d'un point d'accès à un réseau mis en oeuvre par un serveur, la clé réseau permettant au terminal d'être associé au point d'accès lors d'une première connexion du terminal au point d'accès, le procédé de gestion de récupération de clé réseau comportant une émission par le serveur vers un terminal d'une clé réseau mise à disposition par un point d'accès sur le serveur suite à une demande par le terminal au serveur de la clé réseau du point d'accès, la demande comportant un identifiant du point d'accès et ayant été relayée par le serveur au point d'accès Associé à l'identifiant du point d'accès de la demande.

12. Procédé de mise à disposition d'un terminal d'une clé réseau d'un point d'accès à un réseau mis en oeuvre par un point d'accès, la clé réseau permettant au terminal d'être associé au point d'accès lors d'une première connexion du terminal au point d'accès, le procédé de mise à disposition de clé réseau comportant une émission par le point d'accès vers un serveur à destination d'un terminal d'une clé réseau suite à une demande par le terminal au serveur de la clé réseau du point d'accès, la demande comportant un identifiant du point d'accès et ayant été relayée par le serveur au point d'accès Associé à l'identifiant du point d'accès de la demande.

13. Programme comprenant des instructions de code programme pour l'exécution des étapes du procédé de récupération de clé réseau selon l'une quelconque des revendications 1 à 10, et/ ou du procédé de gestion de récupération selon la revendication 11 et/ou du procédé de mise à disposition selon la revendication 12 lorsque ledit programme est exécuté par un processeur.

14. Terminal comportant une interface de récupération d'une clé réseau d'un point d'accès à un réseau mis en oeuvre par un terminal, la clé réseau permettant au terminal d'être associé au point d'accès lors d'une première connexion du terminal au point d'accès, l'interface de récupération comportant un récepteur d'une clé réseau mise à disposition par un point d'accès sur un serveur suite à une demande par le terminal au serveur de la clé réseau du point d'accès, la demande comportant un identifiant du point d'accès et ayant été relayée par le serveur au point d'accès Associé à l'identifiant du point d'accès de la demande.

15. Serveur comportant un gestionnaire de récupération d'une clé réseau d'un point d'accès à un réseau mis en oeuvre par un serveur, la clé réseau permettant au terminal d'être associé au point d'accès lors d'une première connexion du terminal au point d'accès, le gestionnaire de récupération de clé réseau comportant un émetteur vers un terminal d'une clé réseau mise à disposition par un point d'accès sur le serveur suite à une demande par le terminal au serveur de la clé réseau du point d'accès, la demande comportant un identifiant du point d'accès et ayant été relayée par le serveur au point d'accès Associé à l'identifiant du point d'accès de la demande.

16. Point d'accès à un réseau comportant un fournisseur de clé réseau apte à mettre à disposition d'un terminal une clé réseau, la clé réseau permettant au terminal d'être associé au point d'accès lors d'une première connexion du terminal au point d'accès, le fournisseur de clé réseau comportant un émetteur vers un serveur à destination d'un terminal d'une clé réseau suite à une demande par le terminal au serveur de la clé réseau du point d'accès, la demande comportant un identifiant du point d'accès et ayant été relayée par le serveur au point d'accès Associé à l'identifiant du point d'accès de la demande.
